# EUROPEAN PATENT APPLICATION

(11) **EP 4 613 101 A1**
(43) Date of publication of application: **10.09.2025**
(21) Application number: 25162067.0
(22) Date of filing: 06.03.2025
(51) Int. Cl.: A21D 2/18, A21D 2/36, A21D 2/38, A21D 10/00, A21D 13/066, A23L 7/109, A23P 20/20, A21D 13/047

(54) **DOUGH COMPOSITION AND GLUTEN-FREE DOUGH PRODUCTS PRODUCED THEREFROM**

(30) Priority: 07.03.2024 JP 2024035387
(71) Applicant: AJINOMOTO CO., INC., Chuo-ku Tokyo 104-8315 (JP)
(72) Inventor: KODANI, Yoshinori, Kanagawa, 210-8681 (JP); KATO, Fumihiro, Kanagawa, 210-8681 (JP)
(74) Representative: Strehl & Partner mbB

(57) **Abstract**

The present invention provides a dough composition containing the following (a) to (c):
(a) grain flour and/or starch
(b) pregelatinized grain flour and/or pregelatinized starch
(c) a substance selected from fenugreek seeds, chia seeds, seaweed, yam, and agar, and a dough product containing the dough composition. Provided is also a method for producing the dough composition comprising adding water to a dry mix obtained by mixing component (a), component (b), and component (c) in a powder form, and further mixing the mixture.

## Description

### [Technical Field]

The present invention relates to dough compositions, dough products produced therefrom, and production methods thereof. More particularly, the present invention relates to dough compositions that do not substantially contain glutens and food additives and have good process suitability, dough products produced therefrom, and production methods thereof.

### [Background Art]

Noodles are generally prepared by mixing ingredients such as flour, salt and water to obtain dough. Wheat flour, which is the main ingredient of traditional dough, contains gluten as a protein. Gluten is a unique ingredient that has viscoelasticity because the gliadin and glutenin constituting gluten have viscosity and elasticity, respectively. That is, gluten allows the dough to be worked/kneaded/shaped as desired, and for providing chewy texture associated with noodles once cooked.

On the other hand, gluten is known to trigger adverse autoimmune reactions for a broad spectrum of gluten-related diseases, including celiac disease, non-celiac gluten sensitivity (NCGS), gluten ataxia, dermatitis herpetiformis (DH), and wheat allergy. With the growing awareness of gluten-related diseases and health consciousness of consumers as a background, there is an increasing need for gluten-free foods in the fields of noodle making, confectionery making, bread making, and the like, where products have conventionally been made using wheat flour and gluten. There is also a need to make stuffed foods such as gyoza dumpling, shumai, and xiaolongbao gluten-free, since the wrappers thereof are made from wheat flour.

In general, in the fields of noodle making, confectionery making, and bread making, various food additives such as gelling agents and thickeners (hereinafter simply referred to as "additives") are often used in combination to mimic the viscoelasticity of gluten and produce gluten-free products (e.g., Patent Literature 1). However, in recent years, consumers have become increasingly conscious of clean labels (i.e., consumer trends toward preference for clear and easy-to-understand labels of ingredients of foods, or a simple manner of indication thereof), and it is therefore desired to use ingredients familiar to consumers or to avoid the use of additives.

However, as the situation stands, little consideration has been given to achieving clean-label gluten-free dough using only food ingredients (i.e., without using additives).

### [Citation List]

### [Patent Literature]

[Patent Literature 1]
JP 2020-141659 A

### [Summary of Invention]

### [Technical Problem]

The object of the present invention is to provide a dough such as a wrapper for stuffed foods that does not use gluten or additives and has good process suitability (mixing suitability, dough-making property, and moldability), and to provide dough products using the same that satisfy the health-consciousness and clean-label preferences of consumers.

### [Solution to Problem]

The present inventors have conducted intensive studies in an attempt to achieve the above-mentioned object and succeeded in producing a clean-label gluten-free dough composition having good process suitability (mixing suitability, dough-making property, and moldability) by using grain flour or starch as a base and blending this with pregelatinized grain flour or pregelatinized starch and a thickening ingredient selected from fenugreek seeds, chia seeds, seaweed, yam, and agar.

The present inventors have conducted further studies based on these findings and completed the present invention.

Accordingly, the present invention provides the following.

### [Item 1]

A dough composition comprising the following (a) to (c):
(a) grain flour and/or starch
(b) pregelatinized grain flour and/or pregelatinized starch
(c) a substance selected from fenugreek seeds, chia seeds, seaweed, yam, and agar.

### [Item 2]

The dough composition of Item 1, wherein the component (c) is selected from fenugreek seeds, chia seeds, and seaweed.

### [Item 3]

The dough composition of Item 1 or 2, which is substantially free of gluten and additives.

### [Item 4]

The dough composition of Item 3, which is substantially free of alginic acid, sodium alginate, potassium alginate, ammonium alginate, calcium alginate, propylene glycol alginate, carrageenan, locust bean gum, guar gum, gum arabic, xanthan gum, karaya gum, tara gum, gellan gum, curdlan, methylcellulose, ethylcellulose, hydroxypropylcellulose, hydroxypropylmethylcellulose, ethylmethylcellulose, carboxymethylcellulose, sodium carboxymethylcellulose, ethylhydroxyethylcellulose, and polydextrose.

### [Item 5]

The dough composition of any one of Items 1 to 4, wherein the amount of the component (c) is 0.25 to 6 wt% based on the whole dough composition.

### [Item 6]

The dough composition of any one of Items 1 to 5, wherein the component (b) comprises pregelatinized rice flour and/or pregelatinized tapioca starch.

### [Item 7]

The dough composition of any one of Items 1 to 6, wherein the component (c) is in a powder form.

### [Item 8]

The dough composition of any one of Items 1 to 7, further comprising sugar and/or fat or oil.

### [Item 9]

A method for producing the dough composition of Item 1, comprising adding water to a dry mix obtained by mixing component (a), component (b), and component (c) in a powder form, and further mixing the mixture.

### [Item 10]

A dough product comprising the dough composition of any one of Items 1 to 8.

### [Item 11]

The dough product of Item 10, which is a stuffed food.

### [Advantageous Effects of Invention]

According to the present invention, gluten-free dough products with good process suitability (mixing suitability, dough-making property, and moldability) can be provided using clean label ingredients.

### [Description of Embodiments]

The present invention provides a dough composition containing the following (a) to (c):
(a) grain flour and/or starch
(b) pregelatinized grain flour and/or pregelatinized starch
(c) a substance selected from fenugreek seeds, chia seeds, seaweed, yam, and agar (hereinafter also to be referred to as "the composition of the present invention").

The composition of the present invention containing components (a) to (c) as food ingredients can imitate the viscoelasticity of gluten, can provide a dough superior in mixing suitability, dough-making property, and moldability, without containing additives such as gelling agent, thickener and the like, and can be used as the ingredient of gluten-free dough. Preferably, therefore, the composition of the present invention is substantially free of glutens and additives.

In the present specification, "glutens" is a concept including gluten and its constituent proteins gliadin and glutenin, as well as proteins similar to gliadin or glutenin, such as secalin derived from rye and hordin derived from barley, which show cross-reactivity with gliadin (including the corresponding proteins derived from their hybrids), and includes allergens other than gluten that may cause an immune reaction in subjects with wheat allergy, as well as proteins that may cause gluten-related diseases, including celiac disease.

In the present specification, "additive" refers to "food additives" as defined in the Food Sanitation Act of Japan, excluding those that are generally provided as food or beverages, and includes designated additives, existing additives, and natural flavors.

In the present specification, "substantially free of" means that a specific component is contained in an amount of less than 1 wt%, preferably less than 0.5 wt%, more preferably less than 0.1 wt%, further preferably less than 0.05 wt%, further more preferably less than 0.001 wt%, based on the total weight of the composition. Processing aids that are exempt from labeling under the Enforcement Regulations of the Food Sanitation Act of Japan, and additives as carryover are included in the definition of "substantially free" in the present invention.

In the present specification, "gluten-free" is the same as "substantially free of glutens", and means that the amount of glutens in the composition is less than 20 ppm, preferably less than 15 ppm, more preferably less than 10 ppm, further preferably less than 5 ppm, further more preferably less than 1 ppm. U.S. federal guidelines mandate less than 20 ppm gluten for a food product to be characterized as gluten-free, whereas the Gluten-Free Certification Organization mandates that food products contain less than 10 ppm gluten (less than 5 ppm gliadin) to receive their mark. The amount of gluten in the composition can be measured using a method for quantifying gluten that is accepted by a reliable analytical organization known in the art, such as the Association of Analytical Communities (AOAC), the American Association of Cereal Chemists (AACC), and the like (e.g., AACCI Method 38-52.01 "Gluten in Rice Flour and Rice-Based Products by G12 Sandwich ELISA Assay", the AgraQuant^{®} Gluten G12 ELISA kit (AOAC-approved Official Method of Analysis, OMA 2014.03) available from Romer Labs UK Ltd.).

The essential components (a) to (c) of the composition of the present invention are described below.

### Component (a)

### (a1) grain flour

In the present specification, "grain flour" means a powdery or granular food ingredient obtained by milling or crushing grains, and contains ingredients other than starch. The grain flour that the composition of the present invention may contain is not particularly limited, but is preferably one that is substantially free of glutens. Examples thereof include rice flour, brown rice flour, corn flour, sorghum flour, buckwheat flour, potato flour, soybean flour, adzuki bean flour, pea flour, lentil flour, barnyard millet flour, chestnut flour, millet flour, and pigeon oat flour. In a preferred embodiment, rice flour, sorghum flour, corn flour, soybean flour, and the like may be used as grain flour. These grain flours may be used alone or in combination of two or more.

### (a2) starch

The starch used in the composition of the present invention is not particularly limited. Examples thereof include potato starch, corn starch, high amylose corn starch, tapioca starch, non-glutinous rice starch, glutinous rice starch, wheat starch, waxy corn starch, sago palm starch, mung bean starch, sweet potato starch, and the like. The starch may also be a processed starch obtained by subjecting these starches to a physical treatment, an enzymatic treatment, or the like. Examples of starches that have been subjected to a physical treatment (including simple chemical treatments such as hydrolysis, for example, acid treatment, alkali treatment, and bleaching treatment) include moist heat-treated starch, oil-processed starch, acid-treated starch, alkali-treated starch, and bleached starch. Examples of starches that have been subjected to an enzymatic treatment include enzyme-treated starch. In a preferred embodiment, potato starch, corn starch, and the like can be used as the starch. These starches may be used alone or in combination of two or more.

Alternatively, one or more flours may be used in combination with one or more starches.

Starch is composed of amylose and amylopectin, and the ratio of the amounts thereof may affect the viscoelasticity and texture of the dough, and the taste and cooking quality of the dough products produced from the dough. However, the amylose content of the starch (including starch in grain flour) used in the composition of the present invention is not particularly limited. For example, the amylose content relative to the total starch amount may be 10 wt% or more, 15 wt% or more, 18 wt% or more, 20 wt% or more, 22 wt% or more, or the like, and 80 wt% or less, 70 wt% or less, 60 wt% or less, 50 wt% or less, 40 wt% or less, 35 wt% or less, 30 wt% or less, 28 wt% or less, or the like. Amounts below these lower limits or above these upper limits may also be used in the composition of the present invention as long as the resulting dough has good process suitability. The range of the amylose content relative to the total starch content in the composition of the present invention is, for example, 10 to 80 wt%, 10 to 70 wt%, 10 to 60 wt%, 15 to 50 wt%, 15 to 40 wt%, 15 to 35 wt%, 18 to 35 wt%, 18 to 30 wt%, 18 to 28 wt%, 20 to 35 wt%, 20 to 30 wt%, 20 to 28 wt%, 22 to 35 wt%, 22 to 30 wt%, 22 to 28 wt%.

The particle size of the grain flour and starch is not particularly limited. For example, the average particle size of the grain flour and starch may be 5 µm or more, 10 µm or more, 20 µm or more, 40 µm or more, or the like, and 500 µm or less, 400 µm or less, 300 µm or less, 200 µm or less, or the like. Particle sizes below these lower limits or above these upper limits may also be used in the composition of the present invention as long as the resulting dough has good process suitability.

The method for producing the grain flour and starch used as component (a) is not particularly limited, and those produced by a method known per se (e.g., dry milling method, wet milling method) or a method analogous thereto may be used. In addition, commercially available grain flour and starch may also be used.

The content of component (a) in the composition of the present invention may be, for example, 40 wt% or more, preferably 45 wt% or more, more preferably 50 wt% or more, further preferably 52 wt% or more, particularly preferably 53 wt% or more. The content of component (a) in the composition of the present invention may be, for example, 75 wt% or less, preferably 70 wt% or less, more preferably 65 wt% or less, further preferably 63 wt% or less, particularly preferably 62 wt% or less. The range of the content of component (a) in the composition of the present invention may be, for example, 40 to 75 wt%, 45 to 70 wt%, 50 to 65 wt%, 50 to 63 wt%, 50 to 62 wt%, 52 to 65 wt%, 52 to 63 wt%, 52 to 62 wt%, 53 to 65 wt%, 53 to 63 wt%, or 53 to 62 wt%.

### Component (b)

The pregelatinized grain flour and pregelatinized starch used in the composition of the present invention may be the grain flour and starch described above for component (a) that have been pregelatinized. The pregelatinized grain flour or pregelatinized starch is prepared by heating grain flour or starch with water, gelatinizing the grain flour or starch, and then drying and powdering the grain flour or starch. Alternatively, a paste can be reproduced using cold water, and physical properties such as viscosity, water retention, adhesion, and shape retention can be obtained without heating. The present specification includes not only the case where a material that has been subjected to a pregelatinization process in advance and then dried and powdered is used, but also an embodiment in which, as one of the production steps for the composition of the present invention, untreated grain flour and/or starch similar to component (a) (which may have been subjected to a processing treatment other than pregelatinization) is heated with water and gelatinized and then mixed with other components, and an embodiment in which the grain flour and/or starch of component (a) are/is exposed to warm water to allow for partial gelatinization.

In one preferred embodiment, the pregelatinized grain flour is, for example, pregelatinized rice flour. In another preferred embodiment, the pregelatinized starch is, for example, pregelatinized tapioca starch. The pregelatinized grain flour or pregelatinized starch may be used alone, or one or more pregelatinized grain flours and one or more pregelatinized starches may be used in combination.

The production method of pregelatinized grain flour and pregelatinized starch used as component (b) is not particularly limited, and those produced by a method known per se (e.g., methods using drum dryer, spray dryer, extruder, etc.) or a method analogous thereto may be used. In addition, commercially available pregelatinized grain flour and pregelatinized starch may also be used.

The content of component (b) in the composition of the present invention may be, for example, 5 wt% or more, preferably 6 wt% or more, more preferably 7 wt% or more, further preferably 8 wt% or more. The content of component (b) in the composition of the present invention may be, for example, 30 wt% or less, preferably 28 wt% or less, more preferably 26 wt% or less, further preferably 24 wt% or less. The range of the content of component (b) in the composition of the present invention may be, for example, 5 to 30 wt%, 5 to 28 wt%, 5 to 26 wt%, 5 to 24 wt%, 6 to 30 wt%, 6 to 28 wt%, 6 to 26 wt%, 6 to 24 wt%, 7 to 30 wt%, 7 to 28 wt%, 7 to 26 wt%, 7 to 24 wt%, 8 to 30 wt%, 8 to 28 wt%, 8 to 26 wt%, or 8 to 24 wt%.

### Component (c)

### (c1) fenugreek seeds

The composition of the present invention characteristically contains a thickening ingredient for food ingredients, which is selected from fenugreek seeds, chia seeds, seaweed, yam, and agar.

Fenugreek is an annual legume cultivated in India, Africa, and the Middle East, and its seeds are widely used as a spice for curry and the like. The endosperm portion of the seed is viscous.

Fenugreek seeds can be used in the composition of the present invention, for example, by crushing or grinding the whole seeds or the endosperm portion from which the seed coat has been separated and removed, into a powder form by a method known per se (e.g., dry milling method, wet milling method) or a method analogous thereto. Alternatively, fenugreek seeds may be extracted using hot water or an appropriate organic solvent, and the extract may be dried and powdered and then used in the composition of the present invention. Commercially available fenugreek seed powder may also be used.

### (c2) chia seeds

Chia seeds are seeds of the Lamiaceae plant called "chia (*Salvia hispanica*)". There are two types of chia seeds, black chia seeds and white chia seeds, both of which can be used in the composition of the present invention. From the viewpoint of making the color of the composition closer to the natural white color of dough made from wheat flour, white chia seeds are more preferred.

The production method of chia seeds is not particularly limited, and those produced in a powder form by crushing or grinding the seeds by a method known per se (e.g., dry milling method, wet milling method) or a method analogous thereto may be used. In addition, commercially available chia seed powder may also be used.

### (c3) seaweed

The type of seaweed used in the composition of the present invention is not particularly limited as long as it can impart good process suitability to the composition. For example, any of brown algae (e.g., kelp, wakame, and Okinawa mozuku), red algae (e.g., *Gelidium edulis, Gracilaria verrucosa,* and Asakusa-nori), and green algae (e.g., aonori and sea grapes) can be used.

Seaweed can be used in the composition of the present invention by, for example, crushing or grinding the plant body into a powder form by a method known per se (e.g., dry milling method, wet milling method) or a method analogous thereto. Alternatively, the plant body may be extracted with hot water or an appropriate organic solvent, and the extract may be dried and powdered and then used in the composition of the present invention. Commercially available seaweed powder or seaweed extract powder may also be used.

### (c4) yam

The yam used in the composition of the present invention is a perennial vine belonging to the family *Dioscoreaceae,* and wild species include Japanese yam and cultivated species include Chinese yam, Ginkgo yam, and Tsukuneimo. The variety thereof is not particularly limited as long as it can impart good process suitability to the composition of the present invention.

The yam may be provided in any form as long as it can impart good process suitability to the composition of the present invention, and examples thereof include powdered yam, grated yam, and the like, but powdered yam is preferred. The production method of the powdered yam is not particularly limited, and yam produced by a method known per se (e.g., heat drying or freeze drying followed by crushing) or a method analogous thereto may be used. In addition, commercially available powdered yam may also be used.

### (c5) agar

The agar used in the composition of the present invention is not particularly limited as long as it is a commonly used agar obtained by extracting raw seaweed (e.g., Agar seaweed) with hot water, concentrating the extract, cooling and solidifying same, and then squeezing or freezing same followed by drying. The seaweed to be the ingredient is not particularly limited. Instant-soluble agar, low-viscosity agar, high-melting-point agar, and the like can also be used without limitation as long as they can impart good process suitability to the composition of the present invention. In one preferred embodiment, instant-soluble agar can be used. The form of agar is not particularly limited, and any form of agar can be used, such as square agar, thin agar, powdered agar, or flake agar. In one preferred embodiment, agar powder can be used.

The production method of the agar is not particularly limited, and agar produced by a method known per se or a method analogous thereto may be used. In addition, commercially available agar may also be used.

As component (c), any one of fenugreek seeds, chia seeds, seaweed, yam, and agar may be used alone or in combination of two or more thereof. Since yam can be an allergen and agar is not an additive (designated or existing additive) in Japan but may be treated as an additive in other countries, it is more preferable to use a thickening ingredient selected from fenugreek seeds, chia seeds, and seaweed from the viewpoints of safety for everyone and clean labeling according to international standards.

The content of component (c) in the composition of the present invention may be, for example, 0.25 wt% or more, preferably 0.3 wt% or more, more preferably 0.4 wt% or more, further preferably 0.45 wt% or more, particularly preferably 0.5 wt% or more. The content of component (c) in the composition of the present invention may be, for example, 6 wt% or less, preferably 5.5 wt% or less, more preferably 5 wt% or less, further preferably 4.5 wt% or less, particularly preferably 4 wt% or less. The range of the content of component (c) in the composition of the present invention may be, for example, 0.25 to 6 wt%, 0.3 to 5.5 wt%, 0.4 to 6 wt%, 0.4 to 5 wt%, 0.4 to 4.5 wt%, 0.4 to 4 wt%, 0.45 to 6 wt%, 0.45 to 5 wt%, 0.45 to 4.5 wt%, 0.45 to 4 wt%, 0.5 to 6 wt%. 0.5 to 5 wt%, 0.5 to 4.5 wt%, or 0.5 to 4 wt%.

The composition of the present invention contains water in addition to the above-mentioned components (a) to (c). Examples of the water contained in the composition include, but are not limited to, purified water such as distilled water and ion-exchanged water, tap water, and alkaline electrolyzed water, and any water suitable for use in food production can be used.

The content of water in the composition of the present invention may be, for example, 15 wt% or more, preferably 20 wt% or more, more preferably 25 wt% or more, further preferably 27 wt% or more. The content may be, for example, 45 wt% or less, preferably 40 wt% or less, more preferably 35 wt% or less, further preferably 32 wt% or less.

### (d) fat or oil

The composition of the present invention may further contain a fat or oil. By adding a fat or oil, the stickiness of the dough can be reduced and sticking to processing machines (e.g., dough-making machine) or equipment can be suppressed, thereby further improving the dough-making property.

The fat or oil that the composition of the present invention may contain is not particularly limited as long as it is edible. Specific examples of the fat or oil include vegetable oils such as canola oil, soybean oil, safflower oil (including high linoleic safflower oil), corn oil, rapeseed oil, sesame oil, linseed oil, sunflower oil, peanut oil, cottonseed oil, olive oil, rice oil, palm oil (palm olein, palm stearin), palm kernel oil, rice bran oil, perilla oil, grape seed oil, and the like; animal oils such as lard, beef tallow, chicken oil, mutton tallow, horse fat, fish oil, whale oil, butter, egg yolk oil, and the like. In addition, transesterified oils obtained by transesterifying these oils, and hardened oils obtained by hydrogenating these oils, and the like may also be used. The fat or oil that the composition of the present invention may contain may be refined (e.g., salad oil, etc.). The oil that the composition of the present invention may contain is preferably vegetable oil, more preferably canola oil, soybean oil, rapeseed oil, sunflower oil, rice oil, or palm olein. These fats and oils may be used alone or in combination of two or more thereof.

The production method of the fat or oil that the composition of the present invention may contain is not particularly limited, and fat or oil produced by a method known per se or a method analogous thereto may be used. In addition, commercially available fat or oil may also be used.

When the composition of the present invention contains fat or oil, the content thereof may be, for example, 0.25 wt% or more, preferably 0.5 wt% or more, more preferably 0.75 wt% or more, further preferably 1 wt% or more. The content may be, for example, 5 wt% or less, preferably 3 wt% or less, more preferably 2.5 wt% or less, further preferably 2 wt% or less.

### (e) sugar

The composition of the present invention may further contain sugar. By adding sugar, the dough becomes more extensible and the moldability is further improved.

The type of sugar that the composition of the present invention may contain is not particularly limited, and may be any of monosaccharide, oligosaccharide (e.g., disaccharide), and polysaccharide. It is preferably a monosaccharide or oligosaccharide (e.g., disaccharide). Examples of monosaccharide include xylose, arabinose, ribose, and 2-deoxyribose, which are classified as pentoses, and glucose, fructose, and galactose, which are classified as hexoses. As the disaccharide, maltose, trehalose and the like can be mentioned. When the composition of the present invention is used for the production of dough products (including stuffed foods such as dumplings), it is preferable to use, for example, sugars that have low sweetness and little effect on the taste (e.g., maltose, trehalose, glucose, xylose). These sugars may be used alone or in combination of two or more thereof.

The production method of the sugar that the composition of the present invention may contain is not particularly limited, and sugar produced by a method known per se or a method analogous thereto may be used. In addition, commercially available sugar may also be used.

When the composition of the present invention contains sugar, the content thereof may be, for example, 0.5 wt% or more, preferably 1 wt% or more, more preferably 1.25 wt% or more, further preferably 1.5 wt% or more. The content may be, for example, 5 wt% or less, preferably 4 wt% or less, more preferably 3 wt% or less, further preferably 2.5 wt% or less.

The composition of the present invention may contain other food ingredients in addition to the above-mentioned components (a) to (c), water, fat or oil, and sugar. The food ingredients are not particularly limited as long as they do not impair the object of the present invention. Examples thereof include sodium chloride, seasonings, egg yolk powder, egg white powder, whole egg powder, skim milk powder, animal and vegetable proteins, dietary fiber, and the like.

The composition of the present invention can be produced by appropriately mixing the above-mentioned various components within a range that does not impair the object of the present invention. In one embodiment, when component (c) is provided in a powder form, the composition of the present invention can be produced by adding water (when additional water-soluble ingredients or liquid ingredients are contained, such ingredients may be dissolved therein) to a dry mix obtained by mixing component (a), component (b) and component (c) in a powder form (when any additional powder ingredients are contained, the ingredients may be included, hereinafter the same) and further mixing them. When the pregelatinization of component (b) is performed as one of the production steps, for example, pregelatinized grain flour and/or starch are/is prepared separately by adding warm water, and the obtained component (b) is added together with water to a dry mix obtained by mixing components (a) and (c) (and other powder ingredients), and further mixed.

For example, a dry mix can be prepared by mixing all the powder ingredients in a suitable container. The ingredients constituting the dry mix may be added to the container in any order and mixed, where this mixing may be performed manually or using a mixer (e.g., a stand mixer). Mixing may be performed for a time sufficient to uniformly distribute each ingredient throughout the dry mix. It is, for example, but not limited to, 20 minutes or less, preferably 10 minutes or less, more preferably 5 minutes or less, and further preferably 1 to 3 minutes.

Next, water is added to the obtained dry mix and further mixed. This mixing can also be performed manually or using a mixer. The temperature of the water to be added is not particularly limited. It is, for example, 40°C or lower, 30°C or lower, 20°C or lower, 15°C or lower, 10°C or lower, 5°C or lower, preferably 20°C or lower, 15°C or lower, 10°C or lower, 5°C or lower, further preferably 10°C or lower, 5°C or lower.

However, in an embodiment in which component (a) in the dry mix is partially pregelatinized to obtain component (b), warm water can be used. In one preferred embodiment, water is gradually added to the dry mix while simultaneously mixing. Mixing may be performed for a time sufficient to distribute each component uniformly throughout the dough. It may be, but not limited to, for example, 30 minutes or less, preferably 20 minutes or less, more preferably 10 minutes or less, further preferably about 2 to 6 minutes.

When the composition of the present invention contains a fat or oil, the fat or oil can be added to the dry mix and mixed, and then water is added and they can be further mixed. Alternatively, the fat or oil and water can be mixed and emulsified, and the resulting emulsion (preferably an oil-in-water (o/w) emulsion in which the continuous phase is aqueous) can be separately prepared and added to the dry mix. In one preferred embodiment, an emulsion is gradually added to the dry mix while simultaneously mixing. When an emulsion is added, mixing may be performed for a time sufficient to distribute each component uniformly throughout the dough, in the same manner as when water is added. It may be, but not limited to, for example, 30 minutes or less, preferably 20 minutes or less, more preferably 10 minutes or less, further preferably about 2 to 6 minutes.

The composition of the present invention is characterized in that, even under conditions substantially free of gluten and additives, the mixing suitability in the above-mentioned mixing step is equal to or better than that of a dough composition containing gluten or a thickener classified into an additive. As used herein, good mixing suitability means that when a dough composition is mixed using a mixer, the mixer does not stop, and at the end of mixing, only lumps with a diameter of 30 mm or less, preferably 15 mm or less, are generated, and a crumbly dough is obtained. The mixing suitability can be evaluated, for example, by having an expert panel visually confirm the frequency of stoppage of the mixer and the size of the lumps.

The composition of the present invention obtained as described above can be rolled and molded manually (e.g., with a rolling pin) or using a dough-making machine (roller type, extrusion type) or a wrapping machine. In one embodiment, the composition of the present invention may be rolled an appropriate number of times (e.g., once, twice, three times or more) until the rolled dough (dough sheet) has the desired thickness. The composition of the present invention can be molded into a desired dough sheet thickness and/or shape, optionally involving a folding operation, a stretching/drawing operation, or both. The thickness of the dough obtained from the composition of the present invention may be, for example, 3 mm or less, preferably 2 mm or less, more preferably 1.5 mm or less, further preferably 1 mm or less. The thickness of the dough obtained from the composition of the present invention may be, for example, 0.2 mm or more, preferably 0.3 mm or more, more preferably 0.4 mm or more, further preferably 0.5 mm or more.

The composition of the present invention is characterized in that, even under conditions substantially free of gluten and additives, the stickiness of a dough sheet during production is suppressed to a level equal to or more than that of a dough composition containing gluten or a thickener classified into an additive, and the dough sheet has good dough-making property. Specifically, this means that the dough does not stick to the rollers of the roll-type dough-making machine during dough production (rolling molding), and has good releasability. A dough sheet with such good dough-making property can be continuously produced using a roll-type dough-making machine, which is advantageous for industrial production. The dough-making property can be evaluated, for example, by having an expert panel visually confirm whether the dough sheet sticks to the rollers of the roll-type dough-making machine during dough production.

The rolled composition of the present invention can be molded to produce the desired dough product. The composition of the present invention is characterized in that, even under conditions substantially free of gluten and additives, the moldability in the molding step is equal to or better than that of a dough composition containing gluten or a thickener classified into an additive. The moldability of a dough sheet can be evaluated by the degree of extensibility, for example, whether the wrapper cracks or tears when the dough sheet is molded into a stuffed food such as gyoza dumplings. The moldability can be evaluated by having an expert panel visually confirm the condition of the dough sheet during molding.

The present invention also provides dough products produced using the composition of the present invention as the dough. In the present specification, "dough product" refers to any product that is made by forming a dough made of the composition of the present invention into a long or given shape, cooking same, and serving same as food, and includes, for example, ramen, pasta, udon, champon, yakisoba, stuffed foods in which a filling is wrapped with a dough sheet, such as gyoza, and the like. Preferably, the dough product is classified as "Noodles" according to the Japanese Industrial Standards (JIS), including stuffed foods, ramen, pasta, udon, champon, yakisoba, and the like, and is more preferably a stuffed food (e.g., gyoza dumpling, shumai, xiaolongbao, Chinese bun, wonton, spring roll, baozi, ravioli).

For example, when the dough product of the present invention is a stuffed food, the ingredients and production method of the filling are not particularly limited as long as the object of the present invention is not impaired, and the filling may be produced by a method known per se or a method analogous thereto. In addition, the method of covering (wrapping) at least a part of the filling with a wrapper is also not particularly limited as long as the object of the present invention is not impaired, and the filling may be produced by a method known per se or a method analogous thereto.

The production of the stuffed food may also be performed by a method known per se or a method analogous thereto according to the kind thereof. The production method may include covering at least a part of the filling with a dough (dough sheet) made of the composition of the present invention. The method for covering is not particularly limited and may be a method known per se or a method analogous thereto. For example, a conventional machine such as a filling machine or a molder may be used or covering may be performed manually without using any machine.

In one embodiment, the stuffed food can be subjected to a heat treatment. The degree of heating can be adjusted appropriately depending on the purpose of the heat treatment, and can be performed, for example, to make the stuffed food suitable for eating. In this case, the stuffed food does not necessarily need to be subjected to a heat treatment before eating (i.e., it can be provided to consumers in a ready-to-eat state). Examples of the heat treatment method include wet heating (e.g., boiling, steaming, etc.), dry heating (e.g., baking, frying, etc.), dielectric heating (e.g., microwave heating, etc.), and combination of two or more of these (e.g., steam heating, etc.). The heating conditions (e.g., heating temperature, heating time, etc.) are not particularly limited and can be adjusted appropriately depending on the method of heat treatment, and the like. The heating temperature is generally 80 to 260°C, preferably 90 to 230°C, more preferably 90 to 100°C, and the heating time is generally 1 to 15 minutes, preferably 3 to 10 minutes. The timing of the heat treatment is not particularly limited and may be, for example, before freezing or after freezing (e.g., when thawing) when the stuffed food is frozen. The stuffed food may also be subjected to a separate heat treatment after thawing.

The heat-treated stuffed food may be frozen and provided to consumers and the like as a frozen food. In this case, the food can be made suitable for eating by a thawing process (e.g., microwave heating, etc.) for a short time.

In another embodiment, the stuffed food may be provided to consumers without being heat-treated to be suitable for eating, or after being heat-treated to an extent that makes the food not suitable for eating. In this case, the stuffed food must be heat-treated by the consumer before eating. The method for the heat treatment included the same methods as those described above.

In one embodiment, the stuffed food may be frozen into a frozen food. The method for freezing is not particularly limited and may be a method known per se or a method analogous thereto. The freezing conditions (freezing temperature, etc.) are also not particularly limited and may be adjusted as appropriate. The timing of freezing the stuffed food is not particularly limited and, for example, when the stuffed food is heat-treated, it can be frozen after the heat treatment.

The method for thawing the frozen stuffed food is not particularly limited, and may be a method known per se (e.g., wet heating, dry heating, microwave heating, natural thawing, etc.) or a method analogous thereto.

Other steps that are generally performed in the production of stuffed foods may also be included as appropriate within the range that does not impair the object of the present invention.

In one preferred embodiment, a dough product produced from a dough consisting of the composition of the present invention may have sensory properties comparable to those of a dough product produced from a dough containing gluten or a thickener classified into an additive, even under conditions that are substantially free of gluten and additives. Such sensory properties include, for example, natural hardness and elasticity like wheat doughs, and little stickiness. The object of the present invention is to provide a dough composition that is gluten-free and additive-free (clean label) and has good process suitability equivalent to or better than that of a dough containing gluten or a thickener, and dough products using the composition. Therefore, the cooking quality of the dough product is not particularly limited as long as the desired action and effect are achieved; however, it is advantageous for the dough product to also have good sensory properties.

The present invention is more specifically explained in the following by referring to Examples. The present invention is not limited in any way by them.

### [Example]

The ingredients used in this Example are summarized in Table 1. Unless otherwise specified, all of these ingredients are commercially available for food use. The starch content and amylose content relative to the total starch amount, of the grain flours and starches listed in Table 1 are shown in Table 2.

**[Table 1]**

| Ingredient name | General name | Manufacturer |
|---|---|---|
| Rice flour Weak rice flour R (domestic) | rice flour (regular) | Namisato Co., Ltd. |
| Rice flour R (high amylose rice used) | rice flour (high amylose) | Namisato Co., Ltd. |
| Potato starch Minami Tokachi | potato starch | Minami Tokachi Agricultural Processing Agricultural Cooperative Association |
| White sorghum flour | sorghum flour | Nakano Sangyo |
| Corn flour H | corn flour | Kyokuto Chemical Industry, Inc. |
| Full fat soy flour | soy flour | Natural Products, Inc. |
| Corn starch Y (IP) | corn starch | Kato Chemical Co., Ltd. |
| JU-800A | pregelatinized rice flour | Takai Foods |
| Matsunorin M-22 | tapioca-derived pregelatinized starch (unprocessed) | Matsutani Chemical Industry Co., Ltd. |
| Canafen | fenugreek seed powder | EMERALD SEED PRODUCTS LTD |
| Chia seed powder Olplus SC | chia seed powder | Organo Food Tech Co., Ltd. |
| WavePure | seaweed powder (RED GRACILARIA SEAWEED POWDER) | Cargill |
| Yam powder | yam powder | Sunlife Foods Co., Ltd. |
| Ina AgarUZ-5 | agar | Ina Food Industry Co., Ltd. |
| Inageru Ultramannan G-5 | konjac powder | Ina Food Industry Co., Ltd. |
| Kombu Acid 501*1 | propylene glycol alginate (alginic acid ester) | Kimika Co., Ltd. |
| Salad Oil | rapeseed Oil | J-Oil Mills |
| Sunmalt | maltose | Hayashibara |

| | | |
|---|---|---|
| *1: Derivative of alginic acid esterified with propylene glycol, food additive used as emulsifier, stabilizer, thickener, and paste. (E number: E405) | | |

**[Table 2]**

| | Amylose content | Starch content |
|---|---|---|
| Rice flour Weak rice flour R (domestic) | 18% | 76% |
| Rice flour R (high amylose rice used) | 26% | 76% |
| Potato starch Minami Tokachi | 20% | 82% |
| Sorghum flour flour | 27% | 75% |
| Corn flour H | 26% | 71% |
| Corn starch Y (IP) | 26% | 86% |
| Full fat soy flour | - | 0.6% |

Experimental Example 1: Search for clean label ingredients suitable for gluten-free dough wrapper production (1) Evaluation of process (mixing, dough making, molding) suitability

Using the various ingredients shown in Table 1, wrappers for gyoza dumpling having various compositions (wt%) shown in Table 3 were prepared and used to form gyoza dumplings. That is, rice flour (regular) (amylose content 18.0%) was used as the base, and pregelatinized starch and various thickening ingredients (test plot T3: fenugreek seed powder, T4: chia seed, T5: seaweed powder, T6: yam powder, T7: agar, T8: konjac powder) were blended. Test plot T1, which did not contain any thickening ingredients, as a negative control, and test plot T2, which contained the designated additive propylene glycol alginate, known to improve process suitability, as a positive control were also prepared.

### (mixing step)

Using Stand mixer (KitchenAid KSM5ER), only the powder ingredients were mixed at second speed for 3 minutes, and then cold water was added little by little while stirring. After addition of water, the mixture was mixed at first speed for 4 minutes to obtain a crumbly dough.

### (dough-making step)

The obtained dough was rolled to a thickness of 0.7 mm using a dough-making machine.

### (molding step)

According to a conventional method, the filling for meat gyoza dumpling was prepared and weighed out at 11 g per dumpling. The rolled dough was cut into an oval shape of 87 mm x 80 mm, and the filling was wrapped with a dough wrapper and molded using a molder.

Each process suitability (mixing suitability, dough-making property, moldability) was evaluated in 0.5 point increments by a panel of two gyoza dumpling experts in consensus according to the following evaluation criteria. Test plots with all scores of 3 or more were used as Examples.
· mixing suitability (whether KitchenAid can be used to mix into crumbly dough)
5: The KitchenAid does not stop even once during mixing, and when mixing is completed, a crumbly dough with a maximum lump diameter of 15 mm or less is obtained.
4: The KitchenAid does not stop even once during mixing, and when mixing is completed, a crumbly dough with a maximum lump diameter of 30 mm or less is obtained.
3: The KitchenAid rarely stops during mixing, and when mixing is completed, a crumbly dough with a maximum lump diameter of greater than 30 mm is obtained.
2: The KitchenAid frequently stops during mixing.
1: The KitchenAid stops during mixing, and the dough is too hard or elastic and mixing cannot be resumed.
· dough-making property (whether rolled without sticking to the rollers/degree of stickiness)
5: The dough does not stick to the rollers at all.
4: The dough sometimes sticks to the rollers.
3: The dough sticks slightly to the rollers.
2: The dough sticks to the rollers.
1: The dough sticks to the entire roller.
· moldability (whether wrapper breaks during molding/degree of extensibility of dough sheet)
5: The wrapper does not break at all.
4: Slight cracks formed in the wrapper.
3: Cracks formed in the wrapper.
2: Small tears formed in the wrapper.
1: The wrapper tears widely.

The results are shown in Table 3. In test plot T1, the dough surface was rough, cracks were observed in the ears and folds, and the dough-making property and moldability were poor, whereas the test plots containing fenugreek seeds, chia seeds, seaweed powder, yam, or agar showed good process suitability equivalent to the test plots containing the designated additive propylene glycol alginate. On the other hand, the test plot containing konjac powder had a rough dough surface and poor moldability.

**[Table 3]**

| Ingredients (generic name) | | Test plot name | | | | | | | |
|---|---|---|---|---|---|---|---|---|---|
| | | T1 | T2 | T3 | T4 | T5 | T6 | T7 | T8 |
| rice flour (regular) | | 61 | 60 | 59 | 59 | 59 | 59 | 59 | 59 |
| pregelatinized rice flour | | 10 | 10 | 10 | 10 | 10 | 10 | 10 | 10 |
| fenugreek seed powder | | | | 2 | | | | | |
| chia seed powder | | | | | 2 | | | | |
| seaweed powder (RED GRACILARIA SEAWEED POWDER) | | | | | | 2 | | | |
| yam powder | | | | | | | 2 | | |
| agar | | | | | | | | 2 | |
| konjac powder | | | | | | | | | 2 |
| propylene glycol | | | | | | | | | |
| alginate (alginic acid ester) | | | 1 | | | | | | |
| water | | 29 | 29 | 29 | 29 | 29 | 29 | 29 | 29 |
| total | | 100 | 100 | 100 | 100 | 100 | 100 | 100 | 100 |
| process suitabi- lity | mixing suitability | 5 | 5 | 5 | 5 | 5 | 5 | 5 | 5 |
| | dough-making property | 2 | 4 | 4 | 4 | 3 | 4 | 3 | 3 |
| | moldability | 2 | 4 | 4 | 5 | 4 | 4 | 3 | 2 |
| sensory evalua- tion | hardness | 1 | 5 | 3 | 3.5 | 4 | 3 | 4.5 | 2.5 |
| | elasticity | 1 | 5 | 3 | 3 | 4 | 3 | 4 | 2.5 |
| | stickiness | 1 | 5 | 3 | 2 | 3.5 | 2.5 | 4 | 2 |

### (2) Sensory evaluation of gyoza dumpling

The molded gyoza dumplings were steamed and heated at 100°C for 9 minutes, then allowed to cool for 9 minutes, and rapidly frozen in a freezer at -35°C. The frozen gyoza dumplings were placed in an oiled frying pan, covered, and cooked on a gas stove over low to medium heat for 5 minutes, after which the lid was removed and cooked for about 1 to 2 minutes until the bottom surface was browned.

The hardness, elasticity, and stickiness of the cooked gyoza dumplings were evaluated in increments of 0.5 points by a panel of two gyoza dumpling experts in consensus according to the following evaluation criteria.
· hardness
   5: Strong sense of natural hardness of wheat dough.
   4: Sense of natural hardness of wheat dough.
   3: Some natural hardness of wheat dough.
   2: Slight natural hardness of wheat dough.
   1: No natural hardness of wheat dough at all.
· elasticity
   5: Strong sense of natural elasticity of wheat dough.
   4: Sense of natural elasticity of wheat dough.
   3: Some natural elasticity of wheat dough.
   2: Slight natural elasticity of wheat dough.
   1: No natural elasticity of wheat dough at all.
· stickiness
   5: No stickiness at all.
   4: Almost no stickiness.
   3: A little stickiness.
   2: Stickiness.
   1: Strong sense of stickiness.

The results are shown in Table 3. All Examples showed remarkable improvements in all evaluations compared to test plot T1.

### Experimental Example 2: Search for effective base flour/pregelatinized starch

Using the various ingredients shown in Table 1, wrappers for gyoza dumpling having various compositions (wt%) shown in Table 4 were prepared and used to form gyoza dumplings. That is, test plots were prepared in which, in test plot T3 of Experimental Example 1 (using fenugreek seed powder as a thickening ingredient), the type of base flour (T9: rice flour (high amylose) (amylose content 25.9%), T10: potato starch, T12: rice flour (regular)+sorghum flour, T13: rice flour (regular)+corn flour, T14: rice flour (regular)+soy flour, T15: rice flour (regular)+corn starch), or pregelatinized component (T11: tapioca-derived pregelatinized starch (unprocessed)) was changed. In the same manner as in Experimental Example 1, the process suitability of each test plot was evaluated. In the same manner as in Experimental Example 1, the obtained gyoza dumplings were cooked and a sensory evaluation was performed. The results are shown in Table 4.

**[Table 4]**

| Ingredients (generic name) | | Test plot name | | | | | | |
|---|---|---|---|---|---|---|---|---|
| | | T9 | T10 | T11 | T12 | T13 | T14 | T15 |
| rice flour (regular) | | | | 59 | 29 | 29 | 29 | 29 |
| rice flour (high amylose) | | 59 | | | | | | |
| potato starch | | | 59 | | | | | |
| sorghum flour | | | | | 30 | | | |
| corn flour | | | | | | 30 | | |
| soy flour | | | | | | | 30 | |
| corn starch | | | | | | | | 30 |
| pregelatinized rice flour | | 10 | 10 | | 10 | 10 | 10 | 10 |
| tapioca-derived pregelatinized starch (unprocessed) | | | | 10 | | | | |
| fenugreek seed powder | | 2 | 2 | 2 | 2 | 2 | 2 | 2 |
| water | | 29 | 29 | 29 | 29 | 29 | 29 | 29 |
| total | | 100 | 100 | 100 | 100 | 100 | 100 | 100 |
| process suitability | mixing suitability | 5 | 5 | 5 | 5 | 5 | 4 | 5 |
| | dough-making property | 4 | 4 | 4 | 4 | 4 | 3 | 4 |
| | moldability | 4 | 4 | 4 | 3 | 3 | 4.5 | 3.5 |
| sensory evaluation | hardness | 4 | 2 | 3 | 2.5 | 2.5 | 3 | 4 |
| | elasticity | 4 | 2 | 3 | 3 | 3 | 3.5 | 4 |
| | stickiness | 4 | 2 | 2 | 2.5 | 2.5 | 3 | 4 |

Even when the base flour was replaced with rice flour or starch with a high amylose content, the process suitability was good, similar to T3 (test plots T9 and T10). Furthermore, good process suitability was obtained when rice flour was combined with grain flour other than rice flour or starch (test plots T12 to T15). Furthermore, good process suitability was obtained when pregelatinized rice flour was replaced with pregelatinized starch (test plot T11).

Experimental Example 3: Optimization of process suitability by adding sugar, fat or oil

Dough wrappers were prepared in which, in test plot T3, fat or oil (rapeseed oil) was further added (test plot T16) and fat or oil (rapeseed oil) and sugar (maltose) were further added (test plot T17), and molded into gyoza dumplings. The same procedure as in Experimental Example 1 was performed except that the mixing step was performed as follows.

Using a stand mixer (KitchenAid KSM5ER), the powder ingredients alone were mixed at first speed for 2 minutes, rapeseed oil was added and mixed for another minute, then cold water or cold water and maltose were added, and after addition of water, the mixture was mixed at first speed for 4 minutes to obtain a crumbly dough.

In the same manner as in Experimental Example 1, the process suitability of each test plot was evaluated. In the same manner as in Experimental Example 1, the obtained gyoza dumplings were cooked and a sensory evaluation was performed. The results are shown in Table 5.

**[Table 5]**

| Ingredients (generic name) | | Test plot name | | |
|---|---|---|---|---|
| | | T3 | T16 | T17 |
| rice flour (regular) | | 59 | 57.5 | 55.5 |
| pregelatinized rice flour | | 10 | 10 | 10 |
| fenugreek seed powder | | 2 | 2 | 2 |
| rapeseed oil | | | 1.5 | 1.5 |
| maltose | | | | 2 |
| water | | 29 | 29 | 29 |
| total | | 100 | 100 | 100 |
| process suitability | mixing | 5 | 5 | 5 |
| | dough-making | 4 | 5 | 5 |
| | moldability | 4 | 4 | 5 |
| sensory evaluation | hardness | 3 | 2.5 | 2.5 |
| | elasticity | 3 | 2.5 | 3.5 |
| | stickiness | 3 | 3 | 2.5 |

The process suitability was further improved by adding fat or oil, or fat or oil and sugar.

### Experimental Example 4: Examination of the amount of thickening ingredients

In test plots T3 and T5, the amount of fenugreek seed powder and seaweed powder was changed to prepare dough wrappers (test plots T18-T20 and T21-23), and they were molded into gyoza dumplings. In the same manner as in Experimental Example 1, the process suitability of each test plot was evaluated. In the same manner as in Experimental Example 1, the obtained gyoza dumplings were cooked and a sensory evaluation was performed. The results are shown in Table 6.

**[Table 6]**

| Ingredients (generic name) | | Test plot name | | | | | | | |
|---|---|---|---|---|---|---|---|---|---|
| | | T3 | T18 | T19 | T20 | T5 | T21 | T22 | T23 |
| rice flour (regular) | | 59 | 60.5 | 60 | 57 | 59 | 60.5 | 60 | 57 |
| pregelatinized rice flour | | 10 | 10 | 10 | 10 | 10 | 10 | 10 | 10 |
| fenugreek seed powder | | 2 | 0.5 | 1 | 4 | | | | |
| seaweed powder | | | | | | 2 | 0.5 | 1 | 4 |
| water | | 29 | 29 | 29 | 29 | 29 | 29 | 29 | 29 |
| total | | 100 | 100 | 100 | 100 | 100 | 100 | 100 | 100 |
| process suitabi- lity | mixing suitability | 5 | 5 | 5 | 5 | 5 | 5 | 5 | 5 |
| | dough-making property | 4 | 4 | 4 | 3 | 4 | 4 | 4 | 3 |
| | moldability | 4 | 4 | 4 | 4 | 5 | 4 | 4 | 4 |
| sensory evalua- tion | hardness | 3 | 3 | 3 | 3 | 4 | 3.5 | 3.5 | 4 |
| | elasticity | 3 | 3 | 3 | 3.5 | 4 | 3.5 | 3.5 | 4.5 |
| | stickiness | 3 | 3 | 3 | 3.5 | 3.5 | 3.5 | 3.5 | 4 |

The process suitability was good for all the amounts investigated.

### [Industrial Applicability]

The composition of the present invention shows, even under conditions substantially free of gluten and additives, process suitability (mixing suitability, dough-making property, and moldability) equal to or better than that of a dough composition containing gluten or a thickener classified into an additive. Therefore, the composition is extremely useful in that it can provide dough products that meet the needs of consumers, such as the recent trends toward health and clean labels.

## Claims

1. A dough composition comprising the following (a) to (c):
(a) grain flour and/or starch
(b) pregelatinized grain flour and/or pregelatinized starch
(c) a substance selected from fenugreek seeds, chia seeds, seaweed, yam, and agar.

2. The dough composition according to claim 1, wherein the component (c) is selected from fenugreek seeds, chia seeds, and seaweed.

3. The dough composition according to claim 1 or 2, which is substantially free of gluten and additives.

4. The dough composition according to claim 3, which is substantially free of alginic acid, sodium alginate, potassium alginate, ammonium alginate, calcium alginate, propylene glycol alginate, carrageenan, locust bean gum, guar gum, gum arabic, xanthan gum, karaya gum, tara gum, gellan gum, curdlan, methylcellulose, ethylcellulose, hydroxypropylcellulose, hydroxypropylmethylcellulose, ethylmethylcellulose, carboxymethylcellulose, sodium carboxymethylcellulose, ethylhydroxyethylcellulose, and polydextrose.

5. The dough composition according to any one of claims 1 to 4, wherein the amount of the component (c) is 0.25 to 6 wt% based on the whole dough composition.

6. The dough composition according to any one of claims 1 to 5, wherein the component (b) comprises pregelatinized rice flour and/or pregelatinized tapioca starch.

7. The dough composition according to any one of claims 1 to 6, wherein the component (c) is in a powder form.

8. The dough composition according to any one of claims 1 to 7, further comprising sugar and/or fat or oil.

9. A method for producing the dough composition according to claim 1, comprising adding water to a dry mix obtained by mixing component (a), component (b), and component (c) in a powder form, and further mixing the mixture.

10. A dough product comprising the dough composition according to any one of claims 1 to 8.

11. The dough product according to claim 10, which is a stuffed food.
